# EUROPÄISCHE PATENTSCHRIFT

(11) **EP 4 163 178 B1**
(45) Veröffentlichungstag und Bekanntmachung des Hinweises auf die Patenterteilung: **05.11.2025**
(21) Anmeldenummer: 21201594.5
(22) Anmeldetag: 08.10.2021
(51) Int. Cl.: B61B 12/00, B60R 9/10, B62H 3/08, B62H 3/12

(54) **ZWEIRADHALTERUNG ZUM HALTEN VON MINDESTENS EINEM ZWEIRAD IN EINEM FAHRBETRIEBSMITTEL, FAHRBETRIEBSMITTEL SOWIE VERFAHREN ZUR HERSTELLUNG EINES FAHRBETRIEBSMITTELS**
SUPPORT FOR HOLDING AT LEAST ONE TWO-WHEELED VEHICLE ON A TRANSPORTATION SYSTEM, TRANSPORTATION SYSTEM AND METHOD FOR MANUFACTURING A TRANSPORTATION SYSTEM
SUPPORT PERMETTANT DE SUPPORTER AU MOINS UN VÉHICULE À DEUX-ROUES DANS UN ÉLÉMENT DE TRANSPORT, ÉLÉMENT DE TRANSPORT ET PROCÉDÉ DE FABRICATION D'UN ÉLÉMENT DE TRANSPORT

(43) Veröffentlichungstag der Anmeldung: 12.04.2023
(73) Patentinhaber: Bartholet Maschinenbau AG, 8890 Flums (CH)
(72) Erfinder: Küng, Patrick, 8883 Unterterzen (CH); Stalder, Andreas, 7206 Igis (CH); Bartholet, Roland, 8881 Tscherlach (CH); Menzi, Markus, 8758 Obstalden (CH)
(74) Vertreter: Hepp Wenger Ryffel AG

(56) Entgegenhaltungen:
- EP-A1- 1 849 655
- EP-A1- 3 771 598
- WO-A1-2011/101785
- WO-A1-2020/169226
- JP-A- 2019 038 362
- US-A1- 2018 264 984

## Beschreibung

Die vorliegende Erfindung betrifft eine Zweiradhalterung zum Halten von mindestens einem Zweirad, ein Fahrbetriebsmittel sowie ein Verfahren zur Herstellung eines derartigen Fahrbetriebsmittels.

Zweiradhalterungen zum Halten von Zweirädern in Fahrbetriebsmitteln, insbesondere in Fahrbetriebsmitteln einer Seilbahn, werden dazu verwendet, Zweiräder sicher und effizient mit dem Fahrbetriebsmittel zu befördern. Dabei kann grundsätzlich unterschieden werden zwischen dem Transport von Zweirädern durch Sessellifte und dem Transport von Zweirädern mittels Kabinenbahnen. Bei dem Transport von Zweirädern in Sesselliften werden die Zweiräder meistens an den Sessellift angehängt. Bei dem Transport von Zweirädern mittels Kabinenbahn werden die Zweiräder extern an die Kabine angebracht oder in der Kabine transportiert. Extern an die Kabine angebracht werden können pro Kabine nur zwei Zweiräder. Dadurch ist die Transportkapazität eingeschränkt.

EP 1 849 655 A1 offenbart eine Vorrichtung zum Transport eines Fahrrads.

WO 2011/101785 A1 offenbart einen Sesselliftsitz mit einer Transportvorrichtung für ein Fahrrad.

EP 3 771 598 A1 offenbart eine Dachträgeranordnung für ein Fahrzeug mit wenigstens einer Aufnahmeschiene für ein Reifen eines Fahrrads.

JP 2019 038362 A offenbart eine Aufhängevorrichtung für Fahrräder in einem Eisenbahnwagen.

US 2018/264984 A1 offenbart eine Fahrradhalterung mit einem Aufhängungselement.

WO 2020/169226 A1 offenbart ein Fahrbetriebsmittel einer Seilbahn zum Transport von Fahrrädern.

Es sind auch Systeme bekannt, bei denen die Zweiräder in der Kabine transportiert werden. Aus AT 523148 A1 ist beispielsweise eine Zweiradhalterung bekannt, die mittig in der Kabine ausgebildet ist. Diese Kabine ist jedoch ausschliesslich für den Zweiradtransport vorgesehen und kann keine Passagiere transportieren. Aus AT 521785 A4 ist ferner eine Zweiradhalterung bekannt, die sowohl mittig in der Kabine als auch am Kabinenrand ausgebildet sein kann. Nachteilig bei diesen bekannten Zweiradhalterungen ist, dass für den Transport der Zweiräder eigens dafür vorgesehene Kabinen angeschafft werden müssen. Somit müssen neben den Kabinen für den Personentransport zusätzlich Kabinen für den Zweiradtransport vorgehalten werden. Durch die Anschaffung und die Garagierung der zusätzlichen Kabinen bei saisonaler Nichtbenutzung sorgt dies für erhebliche Kostenfolgen. Ein weiterer Nachteil der bekannten Systeme ist, dass bei den bekannten Vorrichtungen nicht Zweiräder und Benutzer gleichzeitig in einer Kabine transportiert werden können. Damit sinkt die Transportkapazität der Fahrbetriebsmittel der Seilbahn.

Es ist die Aufgabe der Erfindung die Nachteile des Stands der Technik zu überwinden und insbesondere eine Zweiradhalterung zum Halten von mindestens einem Zweirad, ein Fahrbetriebsmittel und ein Verfahren zur Herstellung eines derartigen Fahrbetriebsmittels zu schaffen, welches den gleichzeitigen sicheren Transport von Benutzern und Zweirädern in einem Fahrbetriebsmittel erlaubt und gleichzeitig kostengünstig und effizient ist.

Die Aufgabe wird durch ein Fahrbetriebsmittel sowie ein Verfahren zur Herstellung eines Fahrbetriebsmittels gemäss den unabhängigen Patentansprüchen gelöst.

Die Aufgabe wird mit einem Fahrbetriebsmittel mit einer Zweiradhalterung zum Halten von mindestens einem Zweirad in einem Fahrbetriebsmittel, insbesondere einem Fahrbetriebsmittel für eine Seilbahn, gelöst.

Die Zweiradhalterung umfasst eine obere Befestigungsvorrichtung und mindestens eine Schiene zur Aufnahme eines Zweiradreifenabschnitts mit einer Aufnahmeöffnung sowie eine untere Befestigungsvorrichtung zur, insbesondere lösbaren, Befestigung der Zweiradhalterung. Die Schiene ist im Wesentlichen bogenförmig ausgebildet. Ausserdem ist die Schiene einteilig ausgebildet.

Einteilig bedeutet im Rahmen der Erfindung, dass keine Schienenteile zueinander beweglich ausgebildet sind. Selbstverständlich ist es trotzdem möglich, dass die Schiene aus mehreren Schienen abschnitten zusammengesetzt ist. Diese bilden jedoch eine einteilige Schiene, die im Wesentlichen bogenförmig ausgebildet ist.

Halten bedeutet im Rahmen der Erfindung, dass das Zweirad stabilisiert wird aber nicht notwendigerweise vollständig von der Zweiradhalterung fixiert ist. Die Halterung unterstützt jedoch insbesondere das Halten durch den Benutzer und gibt durch die Schiene Halt gegen seitliches Umkippen.

Eine derartige Zweiradhalterung ist besonders einfach und robust aufgebaut. Durch die Montage mittels der oberen Befestigungsvorrichtung und der unteren Befestigungsvorrichtung sind nur sehr wenige Befestigungsvorrichtungen und -punkte notwendig. Die sorgt für eine einfache und effiziente sowie kostengünstige Montage. Dadurch, dass mindestens die untere Befestigungsvorrichtung lösbar mit einer Kabine verbunden werden kann, ist es auch möglich die Zweiradhalterung einfach zu montieren und zu demontieren. Somit können Kabinen einfach mit der Zweiradhaltung nachgerüstet werden. Ausserdem ist es möglich die Kabinen saisonal umzurüsten. Durch die bogenförmige Ausbildung der Schiene ist gewährleistet, dass sich die Schiene und somit die gesamte Zweiradhalterung optimal an die Innenwand der Kabine anschmiegt. Dies sorgt dafür, dass die Zweiradhalterung nur minimal in den Innenraum der Kabine hineinragt und somit viel Raum für Benutzer oder zu transportierende Güter verfügbar bleibt. Die Zweiradhalterung kann zumindest teilweise aus Metall oder Kunststoff oder einem Verbundwerkstoff hergestellt sein. Besonders vorteilhaft ist die Zweiradhalterung aus Aluminium oder Stahl gefertigt, denn Aluminium und Stahl sind günstig und gut zu verarbeiten und stabil sowie optisch ansprechend. Es ist auch möglich, dass die Zweiradhalterung aus mehreren Materialien besteht. Jede Kombination aus gängigen Materialien ist denkbar.

Die obere und die untere Befestigungsvorrichtung können lösbar ausgebildet sein. Hierbei ist insbesondere die obere Befestigungsvorrichtung werkzeuglos lösbar und befestigbar ausgebildet. Denkbar ist diese werkzeuglos lösbare und befestigbare Ausbildung natürlich auch für die untere Befestigungsvorrichtung.

Die obere Befestigungsvorrichtung kann so ausgebildet sein, dass die Zweiradhalterung, beispielsweise an einem Horizontalstab, einhängbar ist. Die obere Befestigungsvorrichtung kann auch mit Haken ausgebildet sein, die in Aussparungen in der Innenwand der Kabine greifen. Die obere Befestigungsvorrichtung kann auch Schrauben oder Klemmmittel umfassen. Die untere Befestigungsvorrichtung ist bevorzugt mit Hilfe von Werkzeug lösbar und befestigbar und kann beispielsweise Schrauben, ein Gewinde, Schnappverschlusselemente und/oder Klemmmittel umfassen. Es ist auch denkbar, dass die obere Befestigungsvorrichtung und/ oder die untere Befestigungsvorrichtung mittels Haken in die Seitenwand der Kabine einhängbar ist. Jede Möglichkeit, mit der die Vorrichtung schnell und lösbar montiert werden kann, ist denkbar. Eine derartige Befestigung der Zweiradhalterung ist besonders schnell und effektiv. Es ist auch möglich, dass die Vorrichtung dauerhaft angebracht wird, beispielsweise durch Nieten oder Schweissen.

Die Schiene kann derartig ausgebildet sein, dass genau ein Zweirad pro Schiene aufnehmbar ist. Somit wird die Anzahl der in der Zweiradhalterung verbauten Teile minimiert.

Die Zweiradhalterung, insbesondere die Schiene, kann Befestigungshilfen umfassen. So ist es möglich, dass die Zweiradhalterung Bürsten und/oder Lamellen und/oder Gummilippen umfasst. Durch die Montage von Befestigungshilfen ist gewährleistet, dass die Zweiräder mit ihren Reifen besonders komfortabel und materialschonend in die Schiene eingebracht werden können und besser gehalten werden. Die vorteilhafte Befestigung der Zweiradreifen schont sowohl das Material der Zweiradhalterung als auch das Zweirad des Benutzers. Des Weiteren sind Befestigungshilfen zum Befestigen des Zweiradrahmens an der Zweiradhalterung denkbar. Somit wird das Haltevermögen optimiert. Insbesondere sind die Befestigungshilfen jedoch in der Schiene angeordnet, besonders bevorzugt an den Innenseiten des Seitenwände der Schienen. Somit wird ermöglicht, dass unterschiedliche Reifenbreiten gehalten werden können.

Bevorzugt ist die Zweiradhalterung dadurch gekennzeichnet, dass die Schiene tangential entlang der Bogenform eine Länge zwischen 100 mm und 1200 mm aufweist. Dadurch ist gewährleistet, dass ein Reifen eines Zweirades optimal gehalten werden kann.

Bevorzugt kann die Zweiradhalterung oberhalb einer Sitzanordnung angeordnet werden. Somit müssen aus einer Kabine vor der Anbringung der Zweiradhalterung keine wesentlichen Teile wie Sitzanordnungen entfernt werden. Vielmehr kann die Zweiradhalterung einer gewöhnlichen Kabine nachgerüstet werden, ohne dass es im Vorfeld wesentlicher Umbauten bedarf. Es ist für Benutzer möglich die Kabine zu benutzen wenn die Zweiradhalterung angebracht ist, auch wenn keine Zweiräder transportiert werden. Somit bleibt die Verwendung einer Kabine mit einer montierten Zweiradhalterung äusserst flexibel, da die Kabine nur Benutzer oder nur Zweiräder oder Benutzer mit Zweirädern transportieren kann. Somit kann eine Kabine mit einer Zweiradhalterung nicht nur schnell nachgerüstet werden, die Kabine ist mit der Zweiradhalterung auch noch im Wesentlichen genauso verwendbar wie ohne die Zweiradhalterung. Somit entstehen im Betrieb der Kabine durch die Montage der Zweiradhalterung keine wesentlichen Einschränkungen. Ausserdem ist durch die Länge tangential entlang der Bogenform gewährleistet, dass sich Zweiräder mit den meisten gängigen Radgrössen in die Schiene einführen lassen.

Die Schiene kann eine Aufnahmeöffnung zur Aufnahme eines Zweiradreifens aufweisen, wobei die Aufnahmeöffnung Aussen eine grössere Ausdehnung aufweist als Innen. Insbesondere weist die Aufnahmeöffnung im Querschnitt eine konische Form auf und insbesondere bevorzugt einen Öffnungswinkel zwischen den beiden Seitenwänden zwischen 40° und 80° auf.

Es ist möglich, dass der Öffnungswinkel der Schiene entlang der Bogenform variiert. Die Schienen können an der unteren Befestigungsvorrichtung einen kleineren Öffnungswinkel aufweisen als an der oberen Befestigungsvorrichtung. Dadurch kann ein Zweiradreifen an der Stelle der Schiene mit dem grösseren Öffnungswinkel von aussen in die Schiene eingebracht werden und durch Absenken des Zweiradreifens zu der Stelle der Schiene mit dem kleineren Öffnungswinkel festgeklemmt werden. Es ist möglich, dass die Schiene mehrere Bereiche mit verschiedenen Öffnungswinkeln aufweist.

Aussen bedeutet die Seite, aus der der Zweiradreifen in die Schiene eingeführt wird. Innen bedeutet die Seite, die am nächsten der Endposition des eingeführten Zweiradreifens bei normaler Nutzung ist.

Durch diese Form wird gewährleistet, dass Reifen von Zweirädern unabhängig von ihrer Reifenbreite optimal in die Schiene eingebracht werden können. Die Zweiradhalterung ist somit sehr einfach aufgebaut und zu bedienen.

Die Aufnahmeöffnung der Schiene kann eine Breitenausdehnung aufweisen, welche zwischen 40 mm und 80 mm beträgt. Dadurch ist gewährleistet, dass die meisten handelsüblichen Zweiradreifen, insbesondere Mountainbikereifen, in die Schiene eingebracht werden können. Somit ist die Zweiradhalterung äusserst flexibel benutzbar.

Es ist möglich, dass die Breitenausdehnung der Schiene entlang der Bogenform variabel ausgebildet ist. Es kann beispielsweise sein, dass die Schiene im Bereich der unteren Befestigungsvorrichtung eine geringere maximale und/ oder minimale Breitenausdehnung aufweist als im Bereich der oberen Befestigungsvorrichtung.

Die Zweiradhalterung kann mindestens zwei Schienen umfassen, welche im Wesentlichen parallel verlaufen und insbesondere mindestens 30 cm parallel beabstandet sind. Dadurch wird gewährleistet, dass mehrere Zweiräder mit der Zweiradhalterung befestigt und transportiert werden können. Dadurch ist ein hohes Mass an Effizienz gewährleistet. Ferner wird gewährleistet, dass durch den Abstand möglichst viele Zweiräder in einer Kabine eingebracht werden können. Somit ist eine Kabine mit einer Zweiradhalterung äusserst effizient, weil gleichzeitig mehrere Zweiräder und mehrere Benutzer aufgenommen werden können.

Das Fahrbetriebsmittel umfasst eine Kabine zum gleichzeitigen Transport von Benutzern und Zweirädern. Die Kabine umfasst zumindest auf einer ersten Seite eine Sitzanordnung für Benutzer. Ausserdem umfasst die Kabine eine Zweiradhalterung, insbesondere eine Zweiradhalterung wie vorhergehend beschrieben. Die Zweiradhalterung ist in dem Innenraum der Kabine, insbesondere oberhalb der ersten Sitzanordnung angeordnet.

Dadurch können in einer Kabine gleichzeitig Benutzer und Zweiräder transportiert werden. Die Benutzer können die Zweiräder selbständig in die Kabine verladen, ohne dass dadurch besonderes Betriebspersonal notwendig wäre. Ausserdem können die Benutzer die Zweiräder auch eigenständig wieder entladen. Dies sorgt dafür, dass der Transport von Zweirädern und Benutzern durch die Kabine besonders effektiv und effizient ist. Die Anbringung der Zweiradhalterung oberhalb der ersten Sitzanordnung sorgt dafür, dass die Sitzanordnung auch mit montierter Zweiradhalterung weiterhin im Wesentlichen ohne Einschränkungen genutzt werden kann. Durch die Montage der Zweiradhalterung innerhalb der Kabine wird gewährleistet, dass die Zweiräder nicht der Witterung ausgesetzt sind.

Die erste Sitzanordnung in dem Fahrbetriebsmittel kann klappbar ausgebildet sein und eine Sitzposition sowie eine Stehposition aufweisen.

Dadurch kann die erste Sitzanordnung in der Sitzposition sitzende Benutzer aufnehmen, wenn sich keine Zweiräder in der Kabine befinden. Ausserdem ist es möglich, dass die Kabine, wenn sich die erste Sitzanordnung in der Stehposition befindet, weitere Güter, beispielsweise Paletten, Gepäck oder jegliche andere zu transportierende Güter effektiv aufnehmen kann. Ferner ist die Sitzanordnung in der Stehposition besonders platzsparend in der Kabine ausgebildet, sodass die Kabine in dieser Variante äusserst viele stehende Benutzer aufnehmen kann.

Das Fahrbetriebsmittel kann eine zweite Sitzanordnung auf einer zweiten Seite umfassen, wobei die zweite Sitzanordnung klappbar ausgebildet ist und eine Sitzfläche zum Verwenden in einer Sitzposition und eine Stehsitzfläche zum Verwenden in einer Stehsitzposition aufweist. In der Sitzposition ist die Sitzfläche im Wesentlichen horizontal angeordnet. In der Stehsitzposition ist die Stehsitzfläche im Wesentlichen horizontal angeordnet. Die Stehsitzfläche weist insbesondere eine Fläche von mindestens 150 cm² pro Sitz, insbesondere mindestens 200 cm² pro Sitz auf.

Dadurch ist die zweite Sitzanordnung äusserst flexibel einsetzbar. So kann die Sitzanordnung in der Sitzposition sitzende Benutzer aufnehmen oder in der Stehsitzposition Benutzer aufnehmen, welche auf der Stehsitzfläche sitzen und sich zusätzlich mit ihren Beinen auf dem Kabinenboden abstützen. Beide Positionen sind somit für Benutzer äusserst angenehm und komfortabel. In der Stehsitzposition ist somit genügend Platz für Passagiere und Zweiräder. Die Passagiere halten ihre Zweiräder während der Fahrt und sitzen selber in der Stehsitzposition auf der Stehsitzfläche.

Es ist weiterhin denkbar, dass auch die erste Sitzanordnung eine Stehsitzfläche umfasst. Somit sind beide Sitzanordnungen auch in einer Stehsitzposition nutzbar.

Bevorzugt weise die Sitzfläche und die Stehsitzfläche eine Polsterung auf. Somit ist die Verwendung angenehmer. Die im Wesentlichen horizontale Position der Stehsitzfläche bedeutet, dass die Stehsitzfläche so angeordnet ist, dass ein Benutzer auf ihr platznehmen kann. Selbstverständlich kann die Stehsitzfläche gekrümmt und oder ergonomisch ausgebildet sein.

Die Kabine des Fahrbetriebsmittels kann Befestigungsmittel aufweisen, welche komplementär zu der oberen Befestigungsvorrichtung und/oder der unteren Befestigungsvorrichtung ausgebildet sind.

Die Befestigungsmittel können beispielsweise Bohrungen, Aussparungen oder Gewindebohrungen sein. Auch Haken sind denkbar. Möglich ist auch, dass die Befestigungsmittel einen Horizontalstab umfassen. Auch eine Kombination aus mehreren der genannten Befestigungsmittel ist denkbar. Die Kabine des Fahrbetriebsmittels kann beispielsweise einen Horizontalstab sowie Gewindebohrungen umfassen, so dass die Zweiradhalterung in den Horizontalstab eingehängt und anschliessend mittels Schrauben fixiert werden kann. Jede mögliche Kombination aus verschiedenen Befestigungsmitteln ist denkbar. Das untere Befestigungsmittel kann eine lösbare Befestigung der untere Befestigungsvorrichtung ermöglichen und somit insbesondere Teil eine Verschraubung sein und insbesondere ein Gewinde, einen Teil eines Bajonettverschlusses, einen Teil eines Verhakung oder ähnliches umfassen.

Die obere Befestigungsvorrichtung und/oder die untere Befestigungsvorrichtung kann Schrauben bzw. Gewinde umfassen. Es ist auch möglich, dass die Zweiradhalterung mittels Spezialschrauben montiert wird, welche nicht mit handelsüblichem Werkzeug bedient werden können. Auf diese Weise könnte die Zweiradhalterung von Betriebspersonal montiert oder demontiert werden. Eine unberechtigte Demontage durch Dritte wäre aber stark erschwert.

Dadurch kann die Zweiradhalterung schnell, effizient, einfach und unkompliziert montiert und demontiert werden.

Die Befestigungsmittel können auf einer ersten Seitenwand an der Innenseite der Kabine und/oder auf einer zweiten Seitenwand an der Innenseite der Kabine ausgebildet sein. Insbesondere können die Befestigungsmittel auf der Seitenwand der ersten Seite der Kabine über der ersten Sitzanordnung angeordnet sein. Selbstverständlich können die Befestigungsmittel auf beiden Innenseiten oberhalb der jeweiligen Sitzanordnung angeordnet sein.

Somit kann die Zweiradhalterung besonders einfach in der Kabine montiert werden. Die Ausbildung der Befestigungsmittel auf der Seitenwand der ersten Seite der Kabine sorgt dafür, dass die Zweiräder oberhalb der ersten Sitzanordnung montiert werden können, sodass sich die erste Sitzanordnung in der Stehposition besonders platzsparend unter den Zweirädern befindet. Somit können Benutzer, welche Zweiräder in die Zweiradhalterung einbringen, gegenüber der Zweiradhalterung auf der zweiten Seite der Kabine auf der zweiten Sitzanordnung Platz nehmen, welche sich bevorzugt in der Stehsitzposition befindet. Dies sorgt dafür, dass die Benutzer und die Zweiräder in der Kabine platzsparend angeordnet sind und die Benutzer trotzdem mit einem hohen Komfort befördert werden können. Wenn zwei Zweiradhalterungen gegenüberliegend an den beiden Innenseiten der Kabine angeordnet sind, ist eine alternierende Anordnung von Passagieren und Zweirädern denkbar, so dass eine noch bessere Platzausnutzung möglich wird. Alternierend bedeutet somit, dass jeweils abwechselnd ein Zweirad in die Halterung der ersten Seite und dann ein Zweirad in die Halterung der zweiten Seite angeordnet wird. Somit wären auch die Schienen jeweils gegenüberliegend parallel versetzt angeordnet.

Die Aufgabe der Erfindung wird weiterhin durch ein Verfahren nach Anspruch 12 gelöst.

Ein derartiges Verfahren führt schnell und einfach zu einem Fahrbetriebsmittel, welches Passagiere und Zweiräder gleichzeitig transportieren kann.

Es ist auch möglich, dass sich in der Kabine eine Arretierungsvorrichtung befindet, so dass die Zweiradhalterung, bevor die Zweiradhalterung durch die Verbindung der oberen Befestigungsvorrichtung und/ oder der unteren Befestigungsvorrichtung mit den Befestigungsmitteln befestigt wird, an eine bestimmte Position von einem Monteur an die Arretiervorrichtung gehalten werden und anschliessend von einem zweiten Monteur montiert werden kann.

Es ist auch möglich, dass die obere Befestigungsvorrichtung so ausgebildet ist, dass die Zweiradhalterung an einem Horizontalstab eingehängt werden kann. Das obere Befestigungsmittel kann daher ein Horizontalstab sein.

Diese Variante ist besonders vorteilhaft, weil so die Zweiradhalterung in den Horizontalstab eingehängt wird und anschliessend mit der unteren Befestigungsvorrichtung und unteren Befestigungsmitteln an der Seitenwand der Kabine befestigt wird.

In der Kabine kann auf der ersten Seite eine erste Sitzanordnung und /oder auf der der ersten Seite gegenüberliegenden zweiten Seite eine zweite Sitzanordnung installiert werden.

Durch die Anordnung von einer Zweiradhalterung und von Sitzanordnungen in einer Kabine kann die Kabine äusserst flexibel genutzt werden.

Die erste und/oder die zweite Sitzanordnung können jeweils klappbar sein und somit eine Sitzposition und eine Stehsitzposition aufweisen.

Dies sorgt für eine effiziente, flexible Nutzung des Kabinenraumes

Es kann auf der ersten Seite der Kabine und auf der zweiten Seite der Kabine eine Zweiradhalterung angeordnet werden.

Somit ist eine noch besser Platzausnutzung bei Passagier- und Zweiradtransport möglich.

Die Erfindung wird in Ausführungsbeispielen anhand folgender Figuren näher erläutert:
Hierbei zeigt
- Figur 1:: Zweiradhalterung in einer Seilbahnkabine,
- Figur 2:: Querschnitt durch eine Seilbahnkabine mit einer Zweiradhalterung,
- Figur 3:: Ausschnitt eines Querschnitts einer Seilbahnkabine mit einer montierten Zweiradhalterung,
- Figur 4:: Zweiradhalterung mit Befestigungshilfen in einer Ansicht,
- Figur 5:: Ansicht von Schienen einer Zweiradhalterung mit Befestigungshilfen,
- Figur 6:: Ausschnitt eines Querschnitts einer Seilbahnkabine mit einer Zweiradhalterung und einer ersten Sitzanordnung und einer zweiten Sitzanordnung,
- Figur 7:: Ausschnitt eines Querschnitts einer Seilbahnkabine mit einer Sitzanordnung.

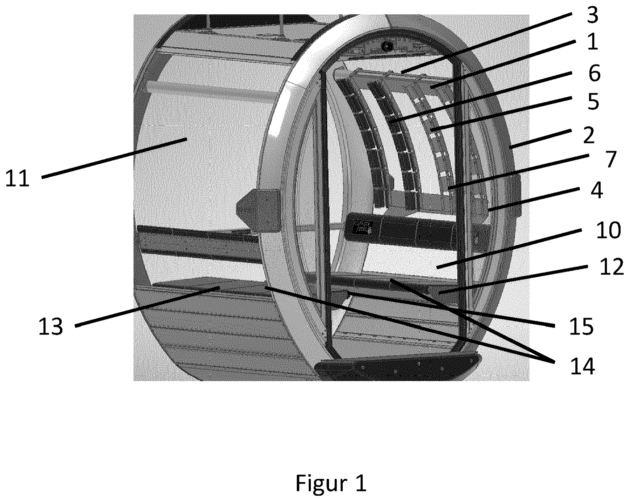

Figur 1 zeigt eine Ansicht einer Kabine 2 mit einer Zweiradhalterung 1. Die Zweiradhalterung 1 ist in der Kabine 2 mit der oberen Befestigungsvorrichtung 3 und der unteren Befestigungsvorrichtung 4 an der ersten Seite 10 der Kabine 2 angebracht. Die Zweiradhalterung 1 weist vier Schienen 5 auf. Von den vier Schienen 5 sind zwei Schienen 5 mit Befestigungshilfen 6 ausgestattet. Die Schienen 5 der Zweiradhalterung 1 sind parallel angeordnet und parallel beabstandet. Ferner umfasst die Kabine 2 mit der Zweiradhalterung 1 eine erste Sitzanordnung 12 und eine zweite Sitzanordnung 13. Die zweite Sitzanordnung 13 ist an der zweiten Seite 11 der Kabine 2 angeordnet. Die erste Sitzanordnung 12 und die zweite Sitzanordnung 13 befinden sich beide in der Sitzposition, in der die Sitzflächen 14 horizontal ausgebildet ist. Die Zweiradhalterung 1 ist an der ersten Seite 10 der Kabine 2 montiert. Die zweite Sitzanordnung 13 ist an der zweiten Seite 11 montiert.

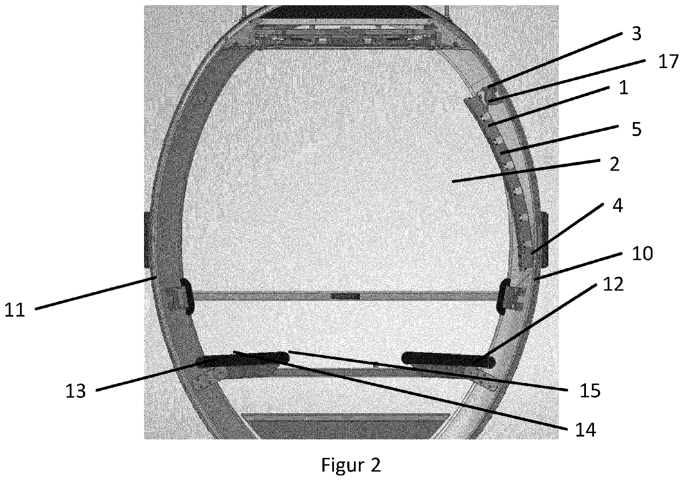

Die Figur 2 zeigt einen Querschnitt durch eine Kabine 2 einer Seilbahn mit einer Zweiradhalterung 1. Die Zweiradhalterung 1 ist mit der oberen Befestigungsvorrichtung 3 und der unteren Befestigungsvorrichtung 4 an der ersten Seite 10 der Kabine 2 angebracht. Die Schienen 5 der Zweiradhalterungen 1 sind bogenförmig geformt. Die Kabine 2 weist ausserdem eine erste Sitzanordnung 12 und eine zweite Sitzanordnung 13 auf. Die Zweiradhalterung 1 befindet sich oberhalb der ersten Sitzanordnung 12. Die erste Sitzanordnung 12 und die zweite Sitzanordnung 13 weist jeweils eine Sitzfläche 14 sowie eine Stehsitzfläche 15 auf. Die Stehsitzflächen 15 sind gekrümmt und damit ergonomisch ausgebildet. Die erste Sitzanordnung 12 und die zweite Sitzanordnung 13 befinden sich jeweils in der Sitzposition, so dass die Sitzflächen 14 jeweils im Wesentlichen horizontal ausgebildet sind. Die zweite Sitzanordnung 13 ist gegenüber der ersten Sitzanordnung 12 an der zweiten Seite 11 montiert. Das Befestigungsmittel 16 umfasst in dieser Ausführungsform im Bereich der oberen Befestigungsvorrichtung 3 einen Horizontalstab. Die obere Befestigungsvorrichtung 3 der Zweiradhalterung 1 ist so ausgebildet, dass die obere Befestigungsvorrichtung 3 in einem horizontalen Stab einhängbar ist. Die Schiene 5 weist Aussparungen auf, so dass die Schiene 5 äusserst leicht ist und materialsparend hergestellt werden kann.

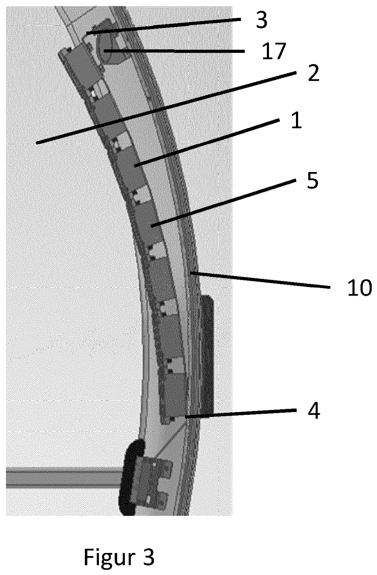

Die Figur 3 zeigt einen Ausschnitt eines Querschnitts durch eine Seilbahnkabine 2 mit einer Zweiradhalterung 1. Die Zweiradhalterung 1 ist mit der oberen Befestigungsvorrichtung 3 und der unteren Befestigungsvorrichtung 4 an der ersten Seite 10 der Kabine 2 angebracht. Die Schiene 5 ist bogenförmig geformt. Ausserdem weist die Schiene 5 Aussparungen auf. Dadurch ist die Schiene 5 leicht sowie einfach und materialeffizient zu fertigen. Die Kabine 2 weist ausserdem Befestigungsmittel 16 auf. In diesem Fall umfasst das Befestigungsmittel 16 ein Horizontalstab, in dem die Zweiradhalterung 1 mit der oberen Befestigungsvorrichtung 3 eingehängt werden kann.

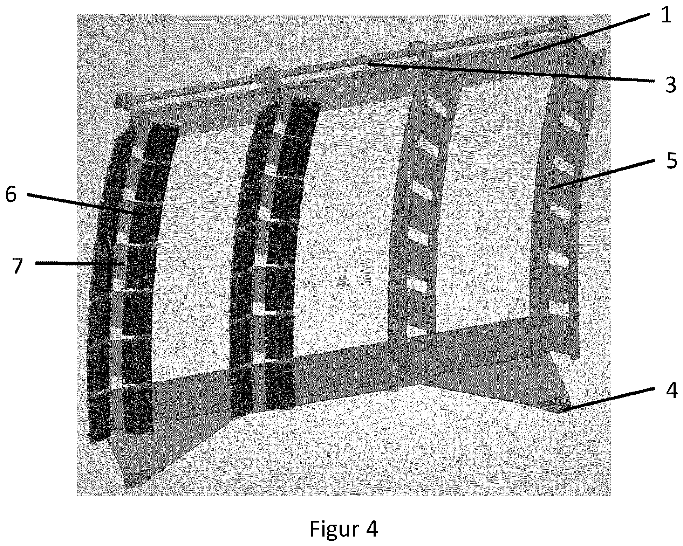

Die Figur 4 zeigt eine Zweiradhalterung 1 in einer Ansicht. Die Zweiradhalterung umfasst Befestigungshilfen 6. Die Befestigungshilfen 6 können beispielsweise aus Gummi ausgebildet sein. Die Zweiradhalterung weist eine obere Befestigungsvorrichtung 3 auf, welche in dieser Ausführung so ausgebildet ist, dass die Zweiradhalterung 1 über einen Horizontalstab eingehängt werden kann. Die vier Schienen 5 sind bogenförmig geformt. Durch die bogenförmige Form schmiegt sich die Zweiradhalterung 1 an die Innenseite einer Kabine an. Die vier Schienen 5 sind parallel ausgebildet. Die vier Schienen 5 sind ausserdem parallel beabstandet, so dass vier Zweiräder in die Zweiradhalterung eingebracht werden können. Ferner weist die Zweiradhalterung 1 eine untere Befestigungsvorrichtung 4 auf. Mit der oberen Befestigungsvorrichtung 3 und der unteren Befestigungsvorrichtung 4 ist es möglich, dass die Zweiradhalterung 1 mit der oberen Befestigungsvorrichtung 3 in einem Horizontalstab eingehängt und anschliessend mit der unteren Befestigungsvorrichtung 4 an der Seitenwand einer Kabine 2 befestigt wird. Die untere Befestigungsvorrichtung 4 weist Schrauben auf, so dass die untere Befestigungsvorrichtung 4 mittels zu den Schrauben komplementäre Gewindebohrungen in der Kabine (nicht dargestellt) befestigt werden kann.

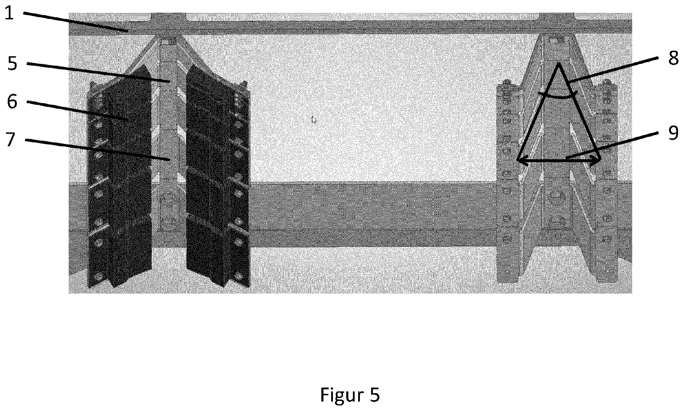

Die Figur 5 zeigt zwei Schienen 5 einer Zweiradhalterung 1 in einer Ansicht. Eine Schiene 5 der Zweiradhalterung 1 weist Befestigungshilfen 6 auf. Ferner weisen die beiden Schienen 5 der Zweiradhalterung 1 jeweils eine Aufnahmeöffnung 7 auf, welche im Querschnitt konisch geformt ist. Die Aufnahmeöffnung 7 weist einen Öffnungswinkel 8 auf. Ferner weist die Aufnahmeöffnung eine Breitenausdehnung 9 auf, welche einen Minimum sowie ein Maximum aufweist. Durch die Befestigungsmittel 6 ist die Zweiradhalterung 1 äusserst flexibel einsetzbar. Die Befestigungsmittel 6 sind flexibel und können im Wesentlichen alle gängigen Zweiradreifengrössen aufnehmen.

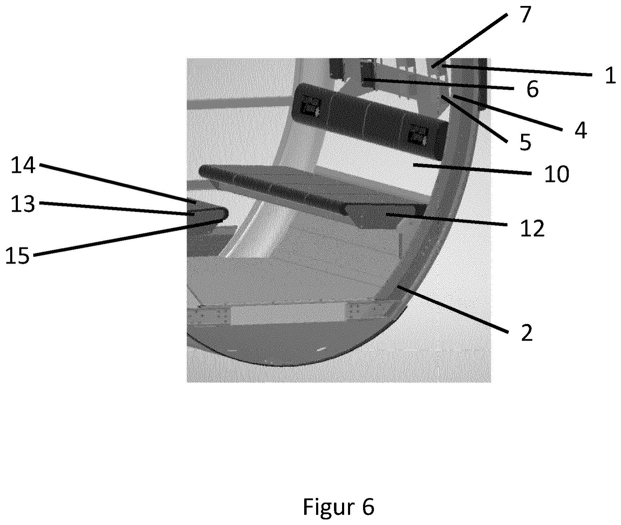

Die Figur 6 zeigt den Ausschnitt eines Querschnitts einer Kabine 2 einer Seilbahn mit einer Zweiradhalterung 1 und einer ersten Sitzanordnung 12 und einer zweiten Sitzanordnung 13. Die Kabine weist eine Zweiradhalterung 1 auf mit einer Aufnahmeöffnung 7. Die Zweiradhalterung 1 ist oberhalb der ersten Sitzanordnung 12 montiert, die sich an der ersten Seite 10 der Kabine 2 befindet. Gegenüber der ersten Seite der ersten Sitzanordnung auf der zweiten Seite 11 befindet sich die zweite Sitzanordnung 13. In dieser beispielhaften Ausführung befinden sich die erste Sitzanordnung 12 und die zweite Sitzanordnung 13 in der Sitzposition. In der Sitzposition sind die Sitzflächen 14 im Wesentlichen horizontal ausgebildet und die Stehsitzflächen 15 sind im Wesentlichen vertikal ausgebildet. Ausserdem sind die Stehsitzflächen 15 gekrümmt und damit ergonomisch ausgebildet.

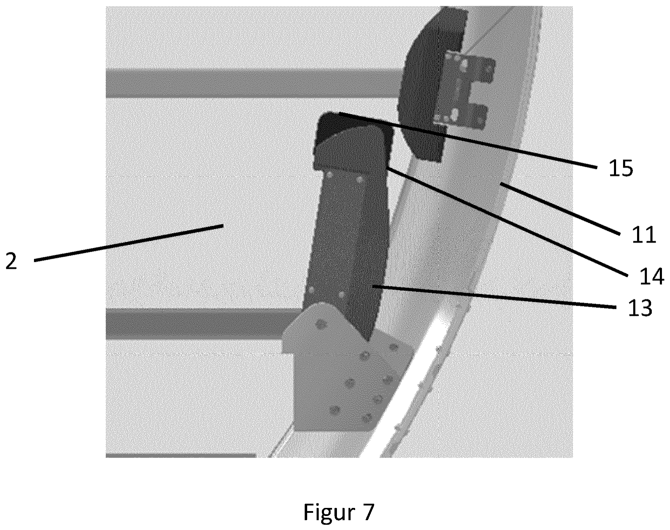

Die Figur 7 zeigt einen Ausschnitt eines Querschnitts einer Kabine 2 mit einer zweiten Sitzanordnung 13, welche an der zweiten Seite 11 montiert ist. Die zweite Sitzanordnung 13 weist eine Sitzfläche 14 sowie eine Stehsitzfläche 15 auf. In dieser beispielhaften Ausführung befindet sich die zweite Sitzanordnung 13 in der Stehsitzposition. Die Stehsitzfläche 15 weist eine Höhenausdehnung 16 auf. In dieser Position können Benutzer auf der Stehsitzfläche 15 Platz nehmen, welche in dieser Position im Wesentlichen horizontal ausgebildet ist. Die zweite Sitzanordnung 13 ist in der Sitzstehposition äusserst platzsparend in der Kabine 2 angeordnet.

## Patentansprüche

1. Fahrbetriebsmittel, insbesondere Fahrbetriebsmittel für eine Seilbahn, umfassend eine Kabine (2) zum gleichzeitigen Transport von Benutzern und Zweirädern, wobei die Kabine (2) zumindest auf einer ersten Seite (10) eine erste Sitzanordnung (12) für Benutzer aufweist, sowie eine Zweiradhalterung (1), umfassend
- eine obere, insbesondere lösbare, Befestigungsvorrichtung (3),
- mindestens eine Schiene (5) zur Aufnahme eines Zweiradreifenabschnitts mit einer Aufnahmeöffnung (7),
- eine untere Befestigungsvorrichtung (4) zur, insbesondere lösbaren, Befestigung der Zweiradhalterung,
wobei die Schiene (5) im Wesentlichen bogenförmig ausgebildet ist und einteilig ausgebildet ist, und wobei die Zweiradhalterung (1) im dem Innenraum der Kabine (2), insbesondere oberhalb der ersten Sitzanordnung (12), angeordnet ist.

2. Fahrbetriebsmittel nach Anspruch 1, **dadurch gekennzeichnet, dass** die erste Sitzanordnung (12) klappbar ausgebildet ist und eine Sitzposition sowie eine Stehposition aufweist.

3. Fahrbetriebsmittel nach einem der vorhergehenden Ansprüche, **dadurch gekennzeichnet, dass** das Fahrbetriebsmittel eine zweite Sitzanordnung (13) auf einer zweiten Seite (11) umfasst, wobei die zweite Sitzanordnung (13) klappbar ausgebildet ist und eine Sitzfläche (14) zum Verwenden in einer Sitzposition und eine Stehsitzfläche (15) zum Verwenden in einer Stehsitzposition aufweist, wobei in der Sitzposition die Sitzfläche (14) im Wesentlichen horizontal angeordnet ist und in der Stehsitzposition die Stehsitzfläche (15) im Wesentlichen horizontal angeordnet ist, wobei die Stehsitzfläche (15) insbesondere eine Fläche von mindestens 150 cm² aufweist.

4. Fahrbetriebsmittel nach einem der vorhergehenden Ansprüche, **dadurch gekennzeichnet, dass** die Kabine (2) Befestigungsmittel (16) aufweist, welche komplementär zu der oberen Befestigungsvorrichtung (3) und/ oder zu der unteren Befestigungsvorrichtung (4) ausgebildet sind.

5. Fahrbetriebsmittel nach Anspruch 4, **dadurch gekennzeichnet, dass** die Befestigungsmittel (16) auf einer ersten Seitenwand an der Innenseite der Kabine (2) und/oder auf einer zweiten Seitenwand an der Innenseite der Kabine (2) ausgebildet sind, insbesondere auf der Seitenwand der ersten Seite der Kabine (2) über der ersten Sitzanordnung (12).

6. Fahrbetriebsmittel nach einem der vorhergehenden Ansprüche, **dadurch gekennzeichnet, dass** die Schiene (5) derartig ausgebildet ist, dass genau ein Zweirad pro Schiene (5) aufnehmbar ist.

7. Fahrbetriebsmittel nach einem der vorhergehenden Ansprüche, **dadurch gekennzeichnet, dass** die Zweiradhalterung (1), insbesondere die Schiene (5), Befestigungshilfen (6), insbesondere Bürsten und/ oder Lamellen und/ oder Gummilippen umfasst.

8. Fahrbetriebsmittel nach einem der vorhergehenden Ansprüche, **dadurch gekennzeichnet, dass** die Schiene (5) tangential entlang der Bogenform eine Längenausdehnung zwischen 100 mm und 1200 mm aufweist.

9. Fahrbetriebsmittel nach einem der vorhergehenden Ansprüche, **dadurch gekennzeichnet, dass** Schiene (5) eine Aufnahmeöffnung (7) zur Aufnahme eines Zweiradreifens aufweist, wobei die Aufnahmeöffnung (7) Aussen eine grössere Ausdehnung aufweist als Innen, insbesondere weist die Aufnahmeöffnung (7) im Querschnitt eine konische Form auf und insbesondere weist die Öffnung bevorzugt einen Öffnungswinkel zwischen den beiden Seitenwänden der Schiene zwischen 40° und 80° auf.

10. Fahrbetriebsmittel nach einem der vorhergehenden Ansprüche, **dadurch gekennzeichnet, dass** die Aufnahmeöffnung (7) eine Breitenausdehnung (9) aufweist, welche zwischen 40 mm und 80 mm beträgt.

11. Fahrbetriebsmittel nach einem der vorhergehenden Ansprüche, **dadurch gekennzeichnet, dass** die Zweiradhalterung (1) mindestens zwei Schienen (5) umfasst, welche im Wesentlichen parallel verlaufen und um mindestens 30 cm parallel beabstandet sind.

12. Verfahren zur Herstellung eines Fahrbetriebsmittels gemäss einem der vorhergehenden Ansprüche, zum gleichzeitigen Transport von Benutzern und Zweirädern umfassend den Schritt:
- Installieren der Zweiradhalterung (1) an der Innenseite der Kabine (2) auf einer ersten Seite (10).

13. Verfahren nach Anspruch 12, **dadurch gekennzeichnet, dass** in der Kabine (2) auf der ersten Seite (10) eine erste Sitzanordnung (12) installiert wird und/oder auf einer der ersten Seite (10) gegenüberliegenden zweiten Seite (11) eine zweite Sitzanordnung (13) installiert wird.

14. Verfahren nach Anspruch 13, **dadurch gekennzeichnet, dass** die erste und/oder die zweite Sitzanordnung (12, 13) klappbar sind und somit eine Sitzposition und eine Stehsitzposition umfassen.

## Claims

1. Transport equipment, in particular transport equipment for a cable car, comprising a cabin (2) for the simultaneous transport of users and two-wheeled vehicles, wherein the cabin (2) has, at least on a first side (10), a first seating arrangement (12) for users, as well as a two-wheeled vehicle holder (1) comprising
- an upper, in particular detachable, fastening device (3),
- at least one rail (5) for receiving a section of a bicycle tyre with a receiving opening (7),
- a lower fastening device (4) for fastening the two-wheeled vehicle holder, in particular detachably,
wherein the rail (5) is essentially arcuate in shape and is formed in one piece, and wherein the two-wheeled vehicle holder (1) is arranged in the interior of the cabin (2), in particular above the first seating arrangement (12).

2. Transport equipment according to claim 1, **characterised in that** the first seat arrangement (12) is designed to be foldable and has a sitting position and a standing position.

3. Transport equipment according to one of the preceding claims, **characterised in that** the transport equipment comprises a second seat arrangement (13) on a second side (11), wherein the second seat arrangement (13) is foldable and has a seat surface (14) for use in a sitting position and a standing seat surface (15) for use in a standing position, wherein in the sitting position the seat surface (14) is arranged substantially horizontally and in the standing position the standing seat surface (15) is arranged substantially horizontally, wherein the standing seat surface (15) in particular has an area of at least 150 cm².

4. Transport equipment according to one of the preceding claims, **characterised in that** the cabin (2) has fastening means (16) which are complementary to the upper fastening device (3) and/or to the lower fastening device (4).

5. Transport equipment according to claim 4, **characterised in that** the fastening means (16) are formed on a first side wall on the inside of the cabin (2) and/or on a second side wall on the inside of the cabin (2), in particular on the side wall of the first side of the cabin (2) above the first seat arrangement (12).

6. Transport equipment according to one of the preceding claims, **characterised in that** the rail (5) is designed in such a way that exactly one bicycle can be accommodated per rail (5).

7. Transport equipment according to one of the preceding claims, **characterised in that** the bicycle holder (1), in particular the rail (5), fastening aids (6), in particular brushes and/or lamellae and/or rubber lips.

8. Transport equipment according to one of the preceding claims, **characterised in that** the rail (5) has a length between 100 mm and 1200 mm tangentially along the curved shape.

9. Transport equipment according to one of the preceding claims, **characterised in that** the rail (5) has a receiving opening (7) for receiving a two-wheeled tyre, wherein the receiving opening (7) has a greater external extension than internal, in particular the receiving opening (7) has a conical cross-section and, in particular, the opening preferably has an opening angle between the two side walls of the rail of between 40° and 80°.

10. Transport equipment according to one of the preceding claims, **characterised in that** the receiving opening (7) has a width (9) of between 40 mm and 80 mm.

11. Transport equipment according to one of the preceding claims, **characterised in that** the two-wheeled vehicle holder (1) comprises at least two rails (5) which run essentially parallel and are spaced apart by at least 30 cm.

12. Method for manufacturing a transport equipment according to one of the preceding claims, for the simultaneous transport of users and two-wheelers, comprising the step of:
installing the two-wheeler holder (1) on the inside of the cabin (2) on a first side (10).

13. Method according to claim 12, **characterised in that** a first seat arrangement (12) is installed in the cabin (2) on the first side (10) and/or a second seat arrangement (13) is installed on a second side (11) opposite the first side (10).

14. Method according to claim 13, **characterised in that** the first and/or second seating arrangement (12, 13) are foldable and thus comprise a sitting position and a standing position.

## Revendications

1. Moyen de transport, en particulier moyen de transport pour un téléphérique, comprenant une cabine (2) pour le transport simultané d'utilisateurs et de deux-roues, la cabine (2) présentant au moins sur un premier côté (10) un premier agencement de sièges (12) pour les utilisateurs, ainsi qu'un support pour deux-roues (1) comprenant
- un dispositif de fixation supérieur (3), en particulier amovible,
- au moins un rail (5) destiné à recevoir une partie du pneu du deux-roues avec une ouverture de réception (7),
- un dispositif de fixation inférieur (4) pour la fixation, en particulier amovible, du support pour deux-roues,
le rail (5) étant essentiellement en forme d'arc et constitué d'une seule pièce, et le support pour deux-roues (1) étant disposé à l'intérieur de la cabine (2), en particulier au-dessus du premier agencement de sièges (12).

2. Véhicule selon la revendication 1, **caractérisé en ce que** le premier agencement de sièges (12) est rabattable et présente une position assise et une position debout.

3. Moyen de transport selon l'une des revendications précédentes, **caractérisé en ce que** le moyen de transport comprend un deuxième agencement de sièges (13) sur un deuxième côté (11), le deuxième agencement de sièges (13) étant rabattable et présentant une surface d'assise (14) pour une utilisation en position assise et une surface d'assise debout (15) à utiliser dans une position debout, la surface d'assise (14) étant disposée essentiellement à l'horizontale dans la position assise et la surface d'assise debout (15) étant disposée essentiellement à l'horizontale dans la position debout, la surface d'assise debout (15) présentant en particulier une surface d'au moins 150 cm².

4. Moyen de transport selon l'une des revendications précédentes, **caractérisé en ce que** la cabine (2) comporte des moyens de fixation (16) qui sont conçus de manière complémentaire au dispositif de fixation supérieur (3) et/ou au dispositif de fixation inférieur (4).

5. Moyen de transport selon la revendication 4, **caractérisé en ce que** les moyens de fixation (16) sont formés sur une première paroi latérale à l'intérieur de la cabine (2) et/ou sur une deuxième paroi latérale à l'intérieur de la cabine (2), en particulier sur la paroi latérale du premier côté de la cabine (2) au-dessus du premier agencement de sièges (12).

6. Moyen de transport selon l'une des revendications précédentes, **caractérisé en ce que** le rail (5) est conçu de telle sorte qu'un seul deux-roues par rail (5) peut être logé.

7. Moyen de transport selon l'une des revendications précédentes, **caractérisé en ce que** le support pour deux-roues (1), en particulier le rail (5), des aides à la fixation (6), en particulier des brosses et/ou des lamelles et/ou des lèvres en caoutchouc.

8. Moyen de transport selon l'une des revendications précédentes, **caractérisé en ce que** le rail (5) présente une extension longitudinale comprise entre 100 mm et 1200 mm tangentiellement le long de la forme courbe.

9. Moyen de transport selon l'une des revendications précédentes, **caractérisé en ce que** le rail (5) présente une ouverture de réception (7) pour recevoir un pneu de deux-roues, l'ouverture de réception (7) présentant une extension plus grande à l'extérieur qu'à l'intérieur, l'ouverture de réception (7) présentant en particulier une forme conique en coupe transversale et l'ouverture présentant de préférence un angle d'ouverture entre les deux parois latérales du rail compris entre 40° et 80°.

10. Moyen de transport selon l'une des revendications précédentes, **caractérisé en ce que** l'ouverture de réception (7) présente une largeur (9) comprise entre 40 mm et 80 mm.

11. Moyen de transport selon l'une des revendications précédentes, **caractérisé en ce que** le support pour deux-roues (1) comprend au moins deux rails (5) qui s'étendent essentiellement parallèlement et sont espacés parallèlement d'au moins 30 cm.

12. Procédé de fabrication d'un moyen de transport selon l'une des revendications précédentes, pour le transport simultané d'utilisateurs et de deux-roues, comprenant l'étape suivante :
Installation du support pour deux-roues (1) à l'intérieur de la cabine (2) sur un premier côté (10).

13. Procédé selon la revendication 12, **caractérisé en ce qu'**un premier agencement de sièges (12) est installé dans la cabine (2) sur le premier côté (10) et/ou un deuxième agencement de sièges (13) est installé sur un deuxième côté (11) opposé au premier côté (10).

14. Procédé selon la revendication 13, **caractérisé en ce que** le premier et/ou le deuxième agencement de sièges (12, 13) sont rabattables et comprennent ainsi une position assise et une position debout.
